# EUROPEAN PATENT APPLICATION

(11) **EP 4 600 770 A1**
(43) Date of publication of application: **13.08.2025**
(21) Application number: 24156281.8
(22) Date of filing: 07.02.2024
(51) Int. Cl.: G05B 19/418

(54) **METHOD FOR A QUALITY CONTROL ROUTINE OF COMPONENTS AND A DATA PROCESSING SYSTEM FOR CARRYING OUT A QUALITY CONTROL ROUTINE FOR COMPONENTS**

(71) Applicant: Airbus S.A.S., 31700 Blagnac (FR)
(72) Inventor: Schertler, Klaus, Taufkirchen (DE)
(74) Representative: OTN Airbus SAS

(57) **Abstract**

A method for a quality control routine of components comprises the following steps: receiving of a data record based on a quality control carried out on a component; detecting of potential defects in the component using the received data record; subdividing the potential defects in the component into at least two subgroups, wherein a user-adjustable setting of a spatial proximity of the potential defects in the component to one another is used for the subdividing into the respective subgroup; assigning the respective subgroups to a respective individual further quality routine so that an efficient quality control routine can be carried out based on the individual assignment.

## Description

The present invention pertains to a method for a quality control routine of components. Furthermore, the present invention pertains also to a data processing system for carrying out a quality control routine for components and a computer-readable medium comprising instructions which, when executed by a computer, cause the computer to carry out the inventive method.

Industrially manufactured components are often subjected to extensive quality control immediately after production. Since quality controls carried out manually are time-consuming and therefore cost-intensive, there is a need to further automate these controls in the future using machines and computers.

Particularly in the aircraft industry, such quality controls must be carried out with particular intensity due to the high demands placed on the components to be installed in the aircraft.

In this context, technical systems are already known in which appropriate algorithms, e.g. Al-algorithms, support an inspector in carrying out quality inspection tasks. Such systems are also referred to as human-machine teaming systems for quality inspection.

Algorithmic methods, especially Al-supported methods, can be very powerful if it comes to the automated detection of defects for the purpose of quality inspection. Fed with specific sensor data, such algorithms can for example automatically detect scratches on a component surface from surface images of the component or detect pores or inclusions inside a component, based on computer tomography scans of the component.

So far it is known that a higher sensitivity of algorithms leads to a higher number of false positive detections. Especially in safety critical domains, where a very high probability of detecting a defect is strictly required, such algorithms need to be operated at a high detection sensitivity. In other words, they need to have a low threshold to bring up a detection. While this lowers the probability that defects get overseen by the algorithm, a high sensitivity typically also leads to a higher number of so-called false positive (FP) detections, which are also called "false alarms". In this context, FPs are non-defects reported as defects.

However, a high number of false positive detections reduces the inspection efficiency. The costs for such quality control procedures therefore increase automatically, since the false alarms have to be checked again for plausibility in order to avoid a high number of rejects of the manufactured components based on these false alarms.

A high number of FPs is especially undesired in quality inspection processes using human-machine teaming. In such teamed processes, the goal is to support human inspectors by defect detection algorithms to perform the inspection task on the one hand more safely and on the other hand more efficiently. More safely in this context means to reduce the number of potentially overseen defects. An increase in efficiency results when the inspection can be performed faster and cheaper. Since defects reported by the algorithms need to be manually verified by the inspector, a high number of FP detections effectively increases the workload of the inspector in an undesired way. This reduces the acceptance by the inspector as well as the overall cost and time efficiency of the inspection process, which may render the use of algorithms useless.

Because the root cause of the problem comes from the known trade-off between detection sensitivity and the resulting number of FPs, the prior art focusses on trying to improve the algorithms to reduce the FP rate while keeping the required sensitivity. This generally increases the development time and costs to find suitable algorithms and further on to optimize them.

For instance, if machine learning (ML) approaches are used, previously obtained FP defect examples can get used as additionally negative training examples in the retraining of the ML system. While this is a reasonable approach, it has some disadvantages, especially for safety critical inspection processes that require process qualification or certification.

A possible strategy may be to optimize the algorithms before qualification. This requires potentially many iterations- or retraining cycles as well as the creation of a large amount of high-quality training data, which is costly since it needs to be created by qualified inspectors to represent the expected ground-truth.

Another possible strategy may be to optimize the algorithms after qualification. Each training of a ML system, that is already part of a qualified process, would require a costly requalification of the overall process, since the process has been changed.

Against this background, it is an object of the present invention to provide a quality control routine that enables efficient processing of detected potential defects in industrially manufactured components.

This object is achieved by a method for a quality control routine of components having the features of claim 1, a data processing system for carrying out a quality control routine for components having the features of claim 14 and a computer-readable medium having the features of claim 15.

According to the invention, a method for a quality control routine of components, comprises receiving of a data record based on a quality control carried out on a component; detecting of potential defects in the component using the received data record; subdividing the potential defects in the component into at least two subgroups, wherein a user-adjustable setting of a spatial proximity of the potential defects in the component to one another is used for the subdividing into the respective subgroup; assigning the respective subgroups to a respective individual further quality routine so that an efficient quality control routine can be carried out based on the individual assignment.

Further, according to the invention, a data processing system for carrying out a quality control routine for components comprises a system control unit with a system control program configured to perform the inventive method.

Further, according to the invention, a computer-readable medium comprises instructions which, when executed by a computer, cause the computer to carry out the inventive method.

Thus, one idea of the present invention is to split the machine generated defect candidates into at least two different groups for e.g. a subsequent explicit and implicit validation by the human inspector. Compared to standard machine learning (ML) approaches, this approach presented by the invention helps solving the trade-off between high detection sensitivity and false alarm (FP) rates. Detecting potential defects in the component using the received data record can comprise at least one detection algorithm. For example, at least one standard detection algorithm providing high sensitivity could be used.

The splitting into those groups is done in a way that is easy to implement, which reduces process development costs, and which minimizes the time and effort to be spent by the human inspector to validate the machine generated defect candidates, even in the presence of a large number of FPs.

Achieving high detection sensitivities combined with low false alarm rates based on supervised machine learning (ML) approaches is quite challenging for processes that require qualification or certification. The costs and times required for the collection of large amounts of high-quality ground-truth data for ML are often underestimated - as well as efforts that have to be spent in qualifying an ML based solution.

The presented invention proposes a solution that is simpler to implement and therefore has lower development costs and which can create faster and cheaper inspection processes, especially in a human-machine teamed way. The presented invention especially targets at solving the trade-off between sensitivity and FP rate.

In a long-term perspective, inspection processes according to this invention will help to collect qualified high-quality ground-truth information by the required validation of machine results by the inspector in each performed inspection task. This qualified data collection can enable the future development and qualification of fully automated solutions based on ML. It is conceivable in this context that at least one respective individual further quality routine can be carried out by a human inspector. It is also conceivable that all individual further quality routines are carried out by a person, i.e. by an inspector, with different individual further quality routines being applied accordingly. In other words, for example, implicit potential defects can be inspected by an inspector with a certain individual quality routine and explicit defects can be inspected by an inspector with another, different from the first, individual quality routine.

Advantageous embodiments and improvements of the present invention are found in the subordinate claims.

According to an embodiment of the invention, the detecting step may include a user-adjustable sensitivity function so that potential defects are found based on this sensitivity function.

In this context, a sensitivity function is designed to influence the number of possible defects found in the component to be checked during the detection process. A high level of sensitivity does not automatically imply that the detected possible defects actually correspond to faulty areas or faulty points in the component to be examined.

In this way, a user of the method presented can set a desired sensitivity before the actual splitting of potential defects in the component and their assignment for corresponding subsequent quality routines, so that a particularly safe and reliable method results.

Since the method presented is aimed at processing a large number of FPs with a manageable amount of work in the sense of a secure quality check, a user can also choose a particularly high sensitivity.

The following splitting and separate procedure for assessing potential defects found in the component to be examined in the method presented allows sensitivity functions with a high sensitivity to possible fault locations or fault points to be used. Creating FPs among the potential defects, which can also be referred to as defects candidates, is fully acceptable at this point, as long as the chosen sensitivity function and the user-adjustable setting provides a sufficient sensitivity to ensure very reliable detection of real defects.

According to an embodiment of the invention, the user-adjustable setting of a spatial proximity of the potential defects in the component to one another may be based on a shortest distance of the respective potential defects in the component to one another in the total volume of the component.

The subsequent assignment to a respective further examination or evaluation of the possible defects in the component can therefore be carried out even more precisely.

A shortest distance, which can also be referred to as shortest geometric distance, of the respective potential defects in the component to one another can be determined by the respective geometric circumferences of the possible defects in the component. In the case of punctual defects, the shortest distance can be easily determined because in each case there are only two relevant locations in the component to be examined.

According to an embodiment of the invention, the user-adjustable setting of a spatial proximity of the potential defects in the component to one another may be based on a shortest distance of the respective defects in the component measured along at least one axis of the up to three dimensional x, y, z coordinate system of the data record representing the component.

Also in this embodiment, the subsequent assignment to a respective further examination or evaluation of the possible defects in the component can therefore be carried out even more precisely.

According to an embodiment of the invention, the potential defects in the component may be assigned to one subgroup alone if a distance to all other potential defects in the component, especially a distance to a closest neighboring potential defect among all other potential defects, is greater than or equal to a user-defined threshold value.

A potential defect in the component isolated in this way can therefore be made available to a suitable additional quality process in a particularly targeted manner. It is therefore possible in an advantageous manner to provide a particularly reliable method.

According to an embodiment of the invention, the potential defects in the component are assigned together to the same subgroup if their distance to each other is less than or equal to a user-defined value.

In this way, potential defects in the component can be bundled and made available to a suitable additional quality process. It is therefore advantageously possible to reduce the effort required to validate the potential defects found in the component.

According to an embodiment of the invention, at least one of the respective individual further quality routines may be designed to display the potential defects in the component via displaying means to a human inspector.

An efficient division of labor between humans and machines for the quality controls to be carried out is therefore particularly easy. The possible defects in the component can therefore be easily displayed to a human inspector, with individual adjustment of the views being possible due to the previously carried out splitting procedure.

According to an embodiment of the invention, the potential defects in the component, which are alone in one respective subgroup, may be displayed explicitly by displaying their location in the component and potential defects in the component which are grouped together in one respective subgroup may be displayed together by displaying only a region in the component comprising all individual locations of the potential defects in the component in this subgroup.

The displaying of their location in the component or the displaying of a region in the component can be understood in connection with the respective locations in the data record. In this way, it is possible for a human inspector to examine selected regions in terms of the respective subgroups as a whole, instead of making an individual assessment of each possible defect found. This means that a large number of possible defects can be examined and then evaluated almost simultaneously by the human inspector with less time expenditure.

In other words, the result of the splitting could be a large number of subgroups, each with only one possible defect, and a further possibly large number of subgroups, each of which includes a possibly large number of potential defects in relation to a respective region. Instead of a respective representation of the individual potential defects, the regions are shown as a whole, without individual potential defects being immediately visible.

A human inspector can therefore, for example, immediately decide based on his or her own experience whether the entire displayed region can actually be assessed as error-free. The clustering of potential defects can occur again and again in certain components at certain locations, in which case a human inspector using the method presented obtains a faster and therefore more efficient approach to assessing such potential defects.

According to an embodiment of the invention, displaying the respective region may be carried out using at least one image overlay function for the displaying means.

For example, a corresponding region can optically be created in a view of the component to be examined, so that the work of the human inspector is facilitated in an advantageous manner. It is also conceivable that a human inspector would use different visual overlays in combination, so that the assessment of a region to be examined can be carried out in less time and still with the necessary care.

According to an embodiment of the invention, the component may be an additively manufactured component. The aforementioned advantages apply equally to this listed embodiment of the present invention.

According to an embodiment of the invention, the quality control may comprise at least one method step based on a computed tomography scan method. The aforementioned advantages apply equally to this listed embodiment of the present invention.

According to an embodiment of the invention, the data record may comprise a 3D array of numeric values. Because 3D volumes are so difficult to evaluate by inspectors, this special form of data processing can lead to a simplification of the quality control routine according to the invention.

According to an embodiment of the invention, the results of the method may be prepared and used for training an Al-supported quality control for components, so that subsequently provided data records based on this quality control for components can be used for the application of the method according to claims 1 to 12.

It is therefore conceivable that, parallel to the method presented, which is to be used for a minimum number of applications, future quality controls, for example current tasks of a human inspector, can be provided even better by appropriately qualified machines.

In principle, all kinds of industries performing some sort of quality inspection can make use of the presented invention. Especially quality inspection tasks performed in a human-machine-teamed way for defect/fault detection can make use of the presented invention. More specifically, all industries or service providers that perform inspection tasks on additive manufactured components (parts) using computed tomography (CT) scans can make use of the presented invention.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Fig. 1 schematically depicts a flow diagram of a method for a quality control routine of components.
Fig. 2 shows a schematic view of a data processing system for carrying out a quality control routine for components.
Fig. 3 is a three-dimensional depiction of a volumetric component with potential defects located in three dimensions.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

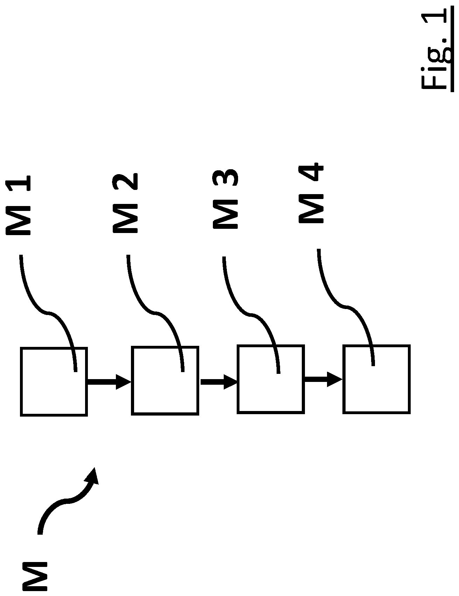

Figure 1 depicts a flow diagram of a method M for a quality control routine of components 1. The method M of Fig. 1 thus correspondingly comprises under M1 receiving of a data record based on a quality control carried out on a component 1. The method M further comprises under M2 detecting of potential defects in the component 1 using the received data record. The method M further comprises under M3 subdividing the potential defects in the component 1 into at least two subgroups. A user-adjustable setting of a spatial proximity criteria of the potential defects in the component 1 to one another is used for the subdividing into the respective subgroup. The method M finally comprises under M4 assigning the respective subgroups to a respective individual further quality routine so that an efficient quality control routine can be carried out based on the individual assignment.

A component 1 to be examined can, for example, be an additively manufactured component. However, it is also conceivable that it is a component manufactured in a different way. For example, it can also be a cast component or an injection molded component or the like.

The received data record can be provided by a data source 2 whereby this data source 2 can be, for example, in the form of CT data (computer tomography) stored on a storage medium. In this respect, quality control can be understood in connection with a CT method. However, it is conceivable that other quality controls could be used beforehand. The data record received from the data source 2 can be used for the detection step in the presented method M. In other words, the presented method M can be designed to have necessary technical functions in order to be able to access the data record received from the data source 2. It is conceivable that it could also be another data source 2.

The data record can be represented, for example, by a 3D array of numeric values. However, it is conceivable that the data record can also be provided in another way.

In the detection step, for example, a sensitive (but otherwise arbitrary) detection algorithm can be used to create a list of defect candidates or potential defects in the component 1. Creating FPs among the defect candidates can be fully acceptable at this point, as long as the detection step provides a high sensitivity. The detection step, for example, can be used for the detection of small pores or inclusions in CT data. Since the detection threshold according to one embodiment can be controlled, the required high sensitivity can be achieved. As high FP rates are acceptable, rather simple but fast algorithms can be used for implementing the detection step in the presented method.

The subdividing step, which can also be named as splitting step, splits the potential defects (defect candidates), which can be provided in a list, into two or more subgroups. For example, in one group of explicit defect candidates and one or more groups of implicit defect candidates. However, it is conceivable that the explicit candidates are divided into respective subgroups so that there are more than one of these subgroups. These subgroups of the respective explicit candidates can also be provided together in a parent group.

The according algorithm for the splitting can work, for example, in the following way. Naturally, the defect candidates are distributed in space. In other words, they have different locations in the space of the component to be examined. For the CT example, each defect candidate can be represented by its location in the 3-dimensional space (x, y, z) of the volumetric CT data. The used splitting algorithms in the subdividing step uses these locations to assign the candidate to a particular subgroup. All defect candidates being isolated in space get assigned to the explicit defect candidate subgroup.

The decision whether a candidate is "isolated" can, for example, be taken by finding its geometric (cartesian) distance to its closest neighbor among all candidates. If this distance is above a definable threshold, the candidates get assigned to an explicit subgroup alone. It is conceivable that corresponding groups would be provided, which in turn would group the explicit candidates into a separate group so that a human inspector could better manage this separate group for subsequent control. It is also conceivable that other ways to measure the respective distance are conceivable, for example, measuring the distance only along a particular axis.

The defect candidates not assigned to the respective explicit subgroup now represent candidates which cluster together. Consequently, they have close neighboring potential defects (defect candidates). They nevertheless can still be members of different clusters of candidates and the presented method can also provide appropriate bundling for these implicit subgroups for later control. Although the core idea of each of these implicit subgroups is to make neighboring defect candidates, which are kept together in a subgroup due to the user-defined settings, later available together in a view for the subsequent quality control routine. For the decision, whether they build one or more clusters, standard clustering algorithms can be used.

These standard clustering algorithms can respectively be programmed in a user-defined manner so that each of the presented embodiments of the presented method can be achieved. In other words, these respectively adjusted algorithms can (if necessary) be used to finally assign each defect candidate, which is not already assigned to an explicit subgroup, to one group of the one or more implicit defect candidates.

Displaying means can, for example, be provided in a so-called inspector frontend, which is designed to be able to represent different subgroups of defect candidates in at least two different ways for validation by the inspector (human inspector). Explicit defect candidates get represented in an explicit validation component. Each group of the implicit feature candidates get represented in an implicit validation component.

In the explicit validation component, each single defect candidate of the respective explicit subgroup gets shown to the human inspector for an explicit validation routine. This is done by showing the data provided from the data source in the area of the candidate's location to allow the inspector to explicitly validate the candidate as defect or to reject the candidate as FP. Image overlays like rectangles, circles or cross-hairs can be used to guide the eye of the inspector to the candidate's location.

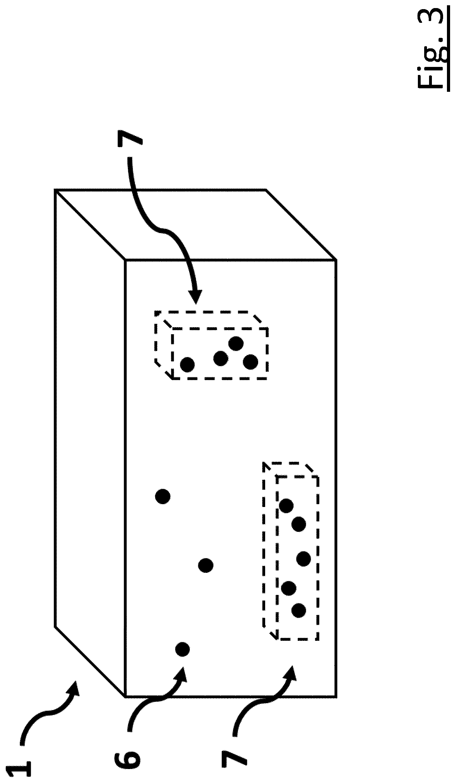

Instead of guiding the attention of the inspector to single candidates for validation (that is to say for a respective individual further quality routine) as for the explicit validation, the implicit validation component guides the inspector only to spatial regions. These regions enclose the locations of candidates in each respective subgroup. Given a group of clustered candidates for the CT example, an enclosing region can for example be defined as the cuboid enclosing all locations of the cluster (including some outer margins) as represented in Fig. 3 in form of the dashed cuboids.

In contrast to the explicit validation, the implicit validation component does by default not provide special image overlays to guide the eye to the many potential defect candidates in a clustered group. Moreover, the inspector can navigate the region to search by himself for potential defects. This allows him to be more efficient by deciding whether the allocated potential defects in this region lead to a positive validation (verified potential defect as being a real defect in the component to be examined).

If no defects are found, the inspector validates the region as defect free, which implicitly labels the defect candidates (potential defects in the component) of the corresponding cluster as FPs. In case the inspector visually detects any defects, the corresponding locations can be labeled by the inspector as defective. For this labeling process, it is favorable to use the existing (but so far not shown) locations stored in the respective subgroup to ease the accurate localization by the inspector (e.g., by bringing up image overlays of candidates close to the inspector's mouse pointer, which can be selected as defect).

The image overlay functions, according to one embodiment of the presented method, can be designed in more detail in various ways. In general, it is favorable to give visual guides, for example in the form of at least one image overlay function for the displaying means, to help the human inspector to only concentrate on the region to be validated. This can for example be done by visual overlays or by image overlay functions, which restrict the possible views on the data to the respective region.

It can also be favorable to support the inspector by providing all necessary (necessary in this sense = to be inspected) views into the regions in an at least partially automated (movie-like) way. For instance, in the CT example, the region is represented by a volume (e.g., a cuboid) that has to be inspected by the inspector slice by slice (that is to say image by image). Those slices can be at least partially automatically moved back and forth in the cuboid so that the inspector can concentrate on the inspection and not on the navigation in the volume.

It has been observed that FP defect candidates often cluster together in geometrically restricted regions. For the CT example, that is for example the case in regions, where so-called beam-hardening creates artifacts in the data, so that sensitive algorithms often wrongly detect some artifacts as potential defects (FPs). Since those artifacts are stronger in regions where the x-rays have to pass through thicker amounts of material (e.g., material of the additive manufactured/ printed part/ component) those regions have a higher probability of containing FP defect candidates.

The rationale of collecting defect candidates for implicit validation in the respective subgroups is therefore to present those defect candidates not in a one-by-one fashion but under the assumption that most candidates are FPs anyway.

In this way, the inspector only needs to label the identified (typically small number of real defects, if at all) as defects and thus avoids the necessity to otherwise label many FPs as not defective. This reduces the overall inspection time and costs.

Since the likelihood that FPs are among the explicit candidates is smaller than among the implicit ones, it is also preferable to first perform the explicit validation. If a defect has been found by the inspector using the explicit validation, the execution of the implicit validation might not be needed anymore, which depends on the criticality of the found defect.

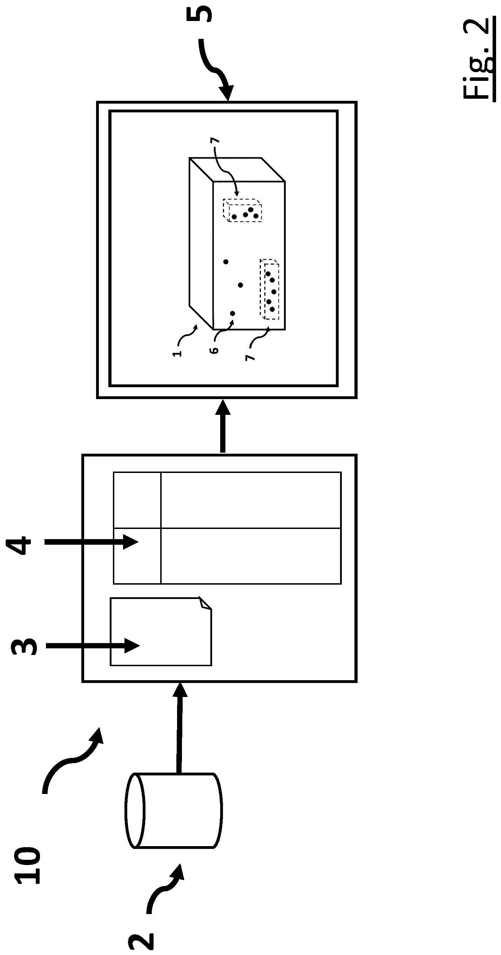

Figure 2 shows a data processing system 10 for carrying out a quality control routine for components 1.

The shown data processing system 10 comprises at least one interface, not shown, to receive a data record (not shown) from an external data source 2 for further processing. For these purposes, the data processing system 10 includes a system control unit (not shown) with a system control program 3. The system control program 3 can be designed to assign detected potential defects to respective subgroups, whereby the method according to the invention presented can be used. The result can, for example, be in the form of a list 4 with corresponding entries.

The data processing system 10 can further include displaying means 5 so that the component 1 to be examined can be displayed. A component 1 to be examined is shown on the displaying means 5.

Figure 3 shows a three-dimensional depiction of a component 1 with potential defects. More precisely, some explicit defect candidates 6 and a large number of implicit defect candidates 7 are shown. The implicit defect candidates 7 can be represented by showing the respective region for later individual quality control using the method M according to the invention.

In other words, the region framed by dashed lines is displayed as a whole without the exact location, i.e., without the respective locations of the implicit defect candidates 7. A human inspector can therefore initially look at the respective regions as a whole and, if necessary, then classify this entire region as error-free. The explicit candidates 6 can be represented individually and assessed accordingly. This means that the inspector can examine each potential defect, which is an explicit candidate 6, individually.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification. The embodiments were chosen and described in order to best explain the principles of the invention and its practical applications, to thereby enable others skilled in the art to best utilize the invention and various embodiments with various modifications as are suited to the particular use contemplated.

### List of reference signs

- 1: component
- 2: data source
- 3: system control program
- 4: list
- 5: displaying means
- 6: explicit defect candidate
- 7: implicit defect candidate
- 10: data processing system
- M: method
- M1-M4: method steps

## Claims

1. Method (M) for a quality control routine of components (1), comprising:
receiving (M1) of a data record based on a quality control carried out on a component (1);
detecting (M2) of potential defects in the component (1) using the received data record;
subdividing (M3) the potential defects in the component (1) into at least two subgroups, wherein a user-adjustable setting of a spatial proximity of the potential defects in the component (1) to one another is used for the subdividing into the respective subgroup;
assigning (M4) the respective subgroups to a respective individual further quality routine so that an efficient quality control routine can be carried out based on the individual assignment.

2. Method (M) according to claim 1, wherein the detecting step includes a user-adjustable sensitivity function so that potential defects are found based on this sensitivity function.

3. Method (M) according to one of the previous claims, wherein the user-adjustable setting of a spatial proximity of the potential defects in the component (1) to one another is based on a shortest distance of the respective potential defects in the component (1) to one another in the total volume of the component (1).

4. Method (M) according to claim 1 or 2, wherein the user-adjustable setting of a spatial proximity of the potential defects in the component (1) to one another is based on a shortest distance of the respective defects in the component (1) measured along at least one axis of the up to three dimensional x, y, z coordinate system of the data record representing the component.

5. Method (M) to one of the claims 1 to 4, wherein the potential defects in the component (1) are assigned to one subgroup alone if a distance to all other potential defects in the component (1), especially a distance to a closest neighboring potential defect among all other potential defects, is greater than or equal to a user-defined threshold value.

6. Method (M) according to one of the previous claims, wherein the potential defects in the component (1) are assigned together to the same subgroup if their distance to each other is less than or equal to a user-defined value.

7. Method (M) according to one of the claims 1 to 6, wherein at least one of the respective individual further quality routines is designed to display the potential defects in the component (1) via displaying means to a human inspector.

8. Method (M) according to claim 7, wherein the potential defects in the component (1), which are alone in one respective subgroup, are displayed explicitly by displaying their location in the component (1) and the potential defects in the component (1) which are grouped together in one respective subgroup are displayed together by displaying only a region in the component (1) comprising all individual locations of the potential defects in the component (1) in this subgroup.

9. Method (M) according to claim 8, wherein displaying the respective region is carried out using at least one image overlay function for the displaying means.

10. Method (M) according to one of the claims 1 to 9, wherein the component (1) is an additively manufactured component.

11. Method (M) according to one of the claims 1 to 10, wherein the quality control comprises at least one method step based on a computed tomography scan method.

12. Method (M) according to one of the claims 1 to 11, wherein the data record comprises a 3D array of numeric values.

13. Method (M) according to one of the claims 1 to 12, wherein the results of the method (M) are prepared and used for training an Al-supported quality control for components (1), so that subsequently provided data records based on this quality control for components (1) can be used for the application of the method (M) according to claims 1 to 12.

14. A data processing system (10) for carrying out a quality control routine for components (1) comprising a system control unit with a system control program (3) configured to perform the method (M) according to one of the claims 1 to 13.

15. A computer-readable medium comprising instructions which, when executed by a computer, cause the computer to carry out the method (M) according to one of the claims 1 to 13.
